# EUROPEAN PATENT APPLICATION

(11) **EP 2 458 819 A1**
(43) Date of publication of application: **30.05.2012**
(21) Application number: 11189919.1
(22) Date of filing: 21.11.2011
(51) Int. Cl.: H04L 29/08

(54) **Systems and methods for asynchronous notification using http**

(30) Priority: 24.11.2010 US 954510
(71) Applicant: Icesoft Technologies Canada Corp., Calgary, AB T2N 4S2 (CA)
(72) Inventor: Goddard, Edward Wayne, Calgary, Alberta T2N 4S2 (CA); Ooststroom, Jeroen Van, Calgary, Alberta T2N 4S2 (CA)
(74) Representative: Hill, Justin John

(57) **Abstract**

Methods and apparatus for asynchronous notification using HTTP. An application server configured to host one or more web applications and process HTTP requests associated with the one or more web applications includes a long polling mechanism configured to maintain an open HTTP connection, and a notification server configured to provide an asynchronous notification to one or more notification clients through the open HTTP connection, wherein the notification includes an identifier for the one or more notification clients with no application data payload.

## Description

### BACKGROUND

### Field

The present disclosure relates generally to the Hypertext Transfer Protocol ("HTTP"), and more specifically to an asynchronous notification mechanism, based on HTTP, for delivering asynchronous state changes to World Wide Web ("web") applications.

### Introduction

HTTP is an Internet protocol used predominantly to deliver content in web applications. It is a client/server protocol where a client makes requests, and a server returns responses. The client is typically a web browser application ("browser") executing on a personal computer. The server is typically an "application server" capable of hosting one or more web applications and processing HTTP requests associated with the hosted application(s). HTTP is typically used to deliver web content in the form of hypertext markup to the browser, where it is displayed in the browser's user interface.

In large-scale web application deployments, capable of handling thousands of simultaneous users, a single server is often insufficient to handle the load of all connecting clients. Modern application servers support clustering, where multiple servers host the same web application, and share the load of connecting clients. Typically, a web server sits in front of the cluster and executes some strategy for load sharing HTTP requests to individual application servers in the cluster.

High-availability of a web application can be achieved in a cluster of application servers using a fail-over strategy, where if one server in the cluster stops handling requests, other servers in the cluster can take over the load for the failed server. In the case of a stateless application, meaning there is no client-specific state maintained by the application, HTTP requests for the failed server can simply be delivered to any other server in the cluster for processing. In the case of a stateful application, meaning there is client-specific state maintained by the application, it is necessary to transfer the client-specific state to another application server prior to rerouting HTTP requests for processing.

Returning now to HTTP and web applications, historically a web application delivers an entire page of hypertext markup in an HTTP response, and the browser renders that entire page of markup in the browser's user interface to display the web page - known as a full page refresh. Modern browsers support a scripting language, JavaScript, that can be used in a web page to cause incremental changes to the displayed web page as the user interacts with it. These incremental changes typically result in a more effective user interface, as they do not require a full page refresh each time the user interacts with the page. Furthermore, modern Browsers support a JavaScript function called XmlHttpRequest that enables JavaScript in the page to execute an HTTP request to the server, and process the response. This mechanism can further improve the effectiveness of the user interface, as incremental changes can be based on specific server-side data returned in the XmlHttpRequest response. The use of JavaScript and XmlHttpRequest to produce these types of pages has become know as "Ajax" programming, Ajax being an acronym for asynchronous javascript and Xml. Web applications developed with Ajax techniques are often referred to as Web 2.0 or Rich Internet Applications.

From the browser perspective, HTTP is a synchronous protocol. Both legacy (full page refresh), and newer Ajax-based web applications initiate HTTP requests based on some user interaction with the page. The user's view onto the state of the application is a snapshot in time from when the request was processed. Additional state changes to the application cannot be delivered asynchronously to the browser, as some user interaction is required to initiate the request. While a polling strategy can be employed to retrieve state changes on a specific interval using HTTP, true asynchronous updates cannot be achieved with the standard use of HTTP.

A technique known as "long polling" can be used to invert the HTTP protocol, effectively enabling asynchronous communication over HTTP. Protocol inversion involves generating a HTTP request from the client, but having the application server hold that connection open (blocked) until some time later when a state change occurs, at which point the response is returned with the new state. Provided an open (blocked) connection is always available, state changes can be delivered asynchronously on an ongoing basis.

Combining long polling with Ajax programming techniques can further improve the effectiveness of the web application's user interface, as it becomes feasible to deliver asynchronous changes to the browser precisely when an application state change occurs, and render those changes incrementally into the web page. The combination of these two techniques effectively enables a class of applications know as real-time collaborative web applications, where the actions of one user of the application are immediately apparent to other connected users. Browser-based instant messaging or chat is a rudimentary example of a real-time collaborative web application.

HTTP protocol inversion was not originally anticipated in the web client/server architecture, and has ramifications with both browser and application server implementations. First for browsers, long polling requires one blocking HTTP connection for asynchronous updates, and a second HTTP connection for non-blocking, user-initiated requests. Modern browsers limit the number of HTTP connections made to the same web domain - Microsoft Internet Explorer being the most restrictive with a connection limit of two. This is sufficient for viewing a single, long-polling-enabled web page, but if multiple browser tabs/windows ("views") are opened to the same page, or multiple long-polling-enabled web pages are viewed under the same web domain, it is not possible for each view to maintain its own blocking connection, as the browser connection limit will be exceeded. A connection-sharing scheme is required where all long-polling-enabled views in the browser share a single blocking connection. Such a connection-sharing scheme can be implemented with JavaScript and a browser cookie for data sharing between views. Second, application server implementations did not originally anticipate the requirement to support Asynchronous Request Processing ("ARP"), and typically require a thread of execution for every open HTTP connection. With long polling, connections can potentially be held open much longer than typical for a non-blocking request, and with large numbers of clients connecting, thread exhaustion can occur at the application server. Application server implementations have begun to support ARP, alleviating potential scalability limitations associated with long polling. Third, if blocking connections are held open indefinitely, their reliability may falter depending on the specific network configuration that exists between the server and clients. Server-side techniques for periodically releasing the blocking connection and re-establishing it from the client can eliminate potential connection reliability problems. Fourth, if multiple long-polling-enabled web applications are deployed to the same application server, the shared blocking connection from the browser must also be shared at the application server. A separate web application is needed to manage the blocking connection, and marshal responses over the blocking connections from all of the web applications. Henceforth this type of application will be described as a "notification server".

Long polling has been used to implement asynchronous message passing mechanisms over HTTP, but typical approaches involve carrying application data payload. These approaches suffer from inherent scalability, reliability and security weaknesses. A pure asynchronous notification mechanism, with no application data payload, would be inherently scalable, reliable and secure.

### SUMMARY

In one aspect of the disclosure, an application server configured to host one or more web applications and process HTTP requests associated with the one or more web applications, includes a long polling mechanism configured to maintain an open HTTP connection, and a notification server configured to provide an asynchronous notification to one or more notification clients through the open HTTP connection, wherein the notification includes an identifier for the one or more notification clients with no application data payload.

In another aspect of the disclosure, a method of providing asynchronous communications from an application server configured to host one or more web applications and process HTTP requests associated with the one or more web applications, the method includes maintaining an open HTTP connection, and providing an asynchronous notification to one or more notification clients through the open HTTP connection, wherein the notification includes an identifier for the one or more notification clients with no application data payload.

In a further aspect of the disclosure, a machine-readable medium comprising instructions executable by a one or more processors provide asynchronous communications from an application server configured to host one or more web applications and processes HTTP requests associated with the one or more web applications, the instructions include code for maintaining an open HTTP connection and code for providing an asynchronous notification to one or more notification clients through the open HTTP connection, wherein the notification includes an identifier for the one or more notification clients with no application data payload.

In yet another aspect of the disclosure, an application server configured to host one or more web applications and process HTTP requests associated with the one or more web applications, includes means for maintaining an open HTTP connection, and means for providing an asynchronous notification to one or more notification clients through the open HTTP connection, wherein the notification includes an identifier for the one or more notification clients with no application data payload.

It is understood that other aspects of the present invention will become readily apparent to those skilled in the art from the following detailed description, wherein it is shown and described only exemplary configurations of server applications operating in various web based environments. As will be realized, the present invention includes other and different aspects of server applications and its several details are capable of modification in various other respects, all without departing from the spirit and scope of the present invention. Accordingly, the drawings and the detailed description are to be regarded as illustrative in nature and not as restrictive.

### BRIEF DESCRIPTION OF THE DRAWINGS

Various aspects of the present invention are illustrated by way of example, and not by way of limitation, in the accompanying drawings, wherein:

FIG. 1 is a conceptual block diagram illustrating an example of a deployment of a single application server hosting a single notification-enabled application.

FIG. 2 is a conceptual block diagram illustrating an example of a deployment of a single application server hosting multiple notification-enabled applications.

FIG. 3 is a conceptual block diagram illustrating an example of a deployment of a cluster of multiple application servers hosting multiple notification-enabled applications.

FIG. 4 is a conceptual block diagram illustrating an example of an implementation for an application server.

### DETAILED DESCRIPTION

The detailed description set forth below in connection with the appended drawings is intended to describe various aspects of the present invention. The invention, however, may be embodied in many different forms and should not be construed as limited to the various aspects presented throughout this disclosure. Rather, these aspects are provided so that this disclosure will be thorough and complete, and will fully convey the scope of the present invention to those skilled in the art. Various aspects of the present invention will be presented with reference to several exemplary embodiments. The term "exemplary" used throughout this disclosure means "serving as an example, instance, or illustration," and should not necessarily be construed as preferred or advantageous over other embodiments disclosed herein. Several exemplary embodiments may be presented with reference to specific details for the purpose of providing a thorough understanding of the invention. However, it will be apparent to those skilled in the art that the invention may be practiced without these specific details. In some instances, well-known structures and components are omitted in order to avoid obscuring the concepts of the invention.

Various aspects of the present invention will now be presented with reference to a communications system comprising one or more HTTP clients in communication with one or more application servers over a communications network using an HTTP protocol. An "HTTP client" is defined to be any software application capable of generating HTTP requests and processing associated HTTP responses. One exemplary embodiment of an HTTP client is a web browser, but other embodiments are possible, such as a web services client. An "application server" is defined to be any software application capable of receiving HTTP requests, processing them in some application-specific way, and returning an associated HTTP response. One exemplary embodiment of an application server is a Java EE Applications Server, but other embodiments are possible, such as a Microsoft .Net Server, or a PHP Server.

The HTTP client may be capable of hosting a notification client. A "notification client" is defined to be application-specific business logic capable of executing within an HTTP client application, when notified to do so by the HTTP client. One exemplary embodiment of a notification client is a JavaScript function contained in a web page being viewed in a browser. Other embodiments are possible within a browser, such as a custom browser plug-in. Still other embodiments are possible in an HTTP client, such as a Java function within a web services client. Notification clients may be identified with a unique Notification Client ID ("NCID").

An identification system may be used to uniquely identify notification clients within a deployment environment consisting of a cluster of application servers running multiple notification-enabled applications. A "notification-enabled application" is defined to be an application, deployable to an application server that is capable of generating asynchronous notifications to one or more notification clients. One exemplary embodiment of a notification-enabled application is a Java EE Web Application, but other embodiments are possible, such as a Microsoft .Net Web Application, or a PHP Application. Notification-enabled applications are identified with a unique Application ID ("APPID"). A "cluster" is defined as two or more application servers, connected with some form of inter-server, inter-application communications, that are capable of sharing the load of HTTP clients connecting to one or more notification-enabled applications deployed in the cluster. One exemplary embodiment of a cluster is two or more Java EE Application Servers connected via Java Messaging System, but other embodiments are possible, such as a cluster of Microsoft Net Servers.

In at least one embodiment of a communications system, various mechanisms may be used for delivering asynchronous notifications over HTTP from one or more notification-enabled applications deployed in a cluster of application servers to uniquely identified notification clients contained in HTTP clients connected to those notification-enabled applications. Long polling over HTTP may be used for the delivery of asynchronous HTTP responses. Such an implementation is readily achievable by those skilled in the art. This implementation should address idiosyncrasies related to management and sharing of the blocking connections required in long polling, as described previously in the background section of this disclosure.

A notification server may be used to deliver notifications to uniquely identified notification clients, and this notification server can be embedded in a single web application to provide notification services in a single notification-enabled application deployment, or as a stand-alone web application capable of providing notification services to multiple notification-enabled applications in a multiple notification-enabled application deployment.

A group naming system may be used to support organization of uniquely identified notification clients into groups that will receive common notifications. Group naming strategies applied with this mechanism may be defined in some application-specific manner. The notification servers may be used to manage group names, organize individual notification clients under those named groups, and deliver notifications to entire groups of notification clients based on group membership. Notification servers may provide namespace separation for group names in different notification-enabled applications. The groups may be removed from management at a notification server when group membership drops to zero members. Group notifications may be broadcast from an originating notification server to all other notification servers in the cluster, and those notification servers in turn may deliver individual notifications to notification clients based on group membership. Broadcasting of group notifications tends to substantially reduce message traffic when compared with broadcasting individual notification client notifications. A notification tag system may be used for notification servers that prevent duplicate notifications from being delivered in a clustered deployment of notification servers, even in the case of an application server failure and subsequent fail-over processing.

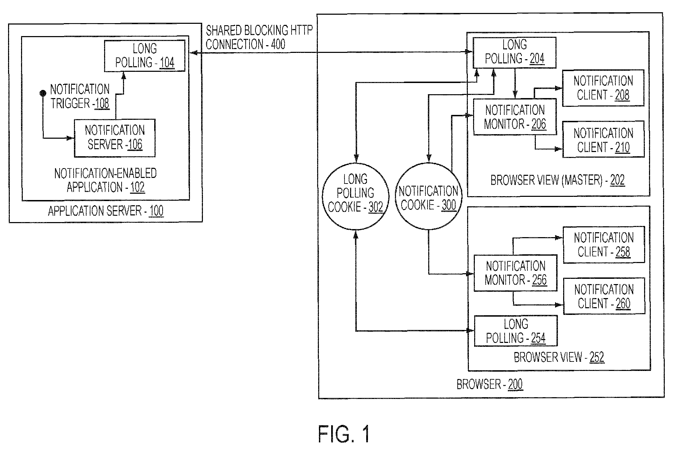

An exemplary embodiment of a communications system will now be presented with reference to FIG. 1. In this embodiment, a single application server 100 is shown with a single notification-enabled application 102, which contains a long polling mechanism 104, and a notification server 106 capable of receiving a notification trigger 108 and delivering it to a specific notification client via the long polling mechanism 104. The notification server 106 may assign a unique APPID to the notification-enabled application 102 at application start-up time.

An HTTP client 200 is shown with multiple page views 202 and 252, which respectively contain notification clients 208 and 210 in view 202, and notification clients 258 and 260 in view 252. As illustrated, view 202 is acting as the master for long polling, but the same master duties could be carried out by view 252.

A long polling cookie 302 may be used to coordinate master view selection. A long polling mechanism 204 may be used to receive notifications from the application server 100 over a shared blocking HTTP connection 400. These notifications may be placed in a notification cookie 300. A notification monitor 206 may be used to continually poll the notification cookie 300 for the presence of notifications for the notification clients 208 and 210. Should a notification arrive for the notification client 208, it may be removed from the notification cookie 300, and the notification client 208 may be executed via a JavaScript function call. Likewise, should a notification arrive for the notification client 210, it may be removed from the notification cookie 300, and the notification client 210 may be executed via a JavaScript function call. As with the notification monitor 206, the notification monitor 256 may continually poll the notification cookie 300 for the presence of notifications for the notification clients 258 and 260. Should a notification arrive for the notification client 258, it may be removed from the notification cookie 300, and the notification client 258 may be executed via a JavaScript function call. Likewise, should a notification arrive for the notification client 260, it may be removed from the notification cookie 300, and the notification client 260 may be executed via a JavaScript function call. As illustrated, this embodiment is shown with two views, each with two notification clients, but the present invention is not limited in the number of views and the number of notification clients per view that can be supported. As illustrated, this embodiment is shown with only one HTTP client 200 connecting to the notification-enabled application 102, but the present invention is not limited in the number of HTTP clients connecting to a notification-enabled application.

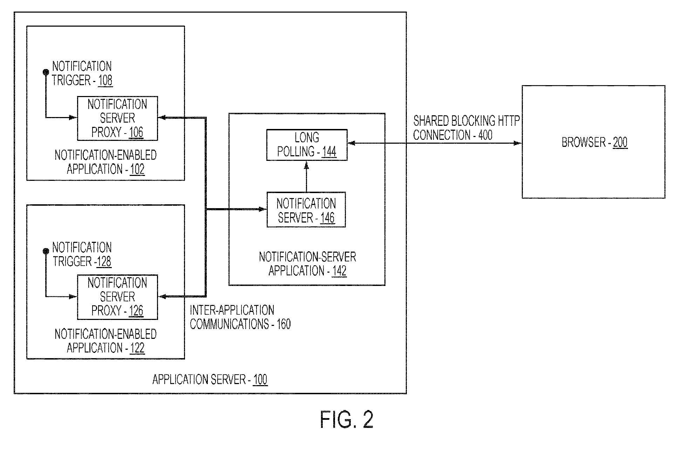

An alternative embodiment of a communications system will now be presented with reference to FIG. 2. In this embodiment, the HTTP client 200 is unchanged from FIG. 1, and is therefore not depicted in detail. The application server 100 is shown with multiple deployed notification-enabled applications 102 and 122, as well as a notification server application 142. The notification-enabled application 102 is shown with a notification server proxy 106, which is capable of processing a notification trigger 108, and delivering it to a notification server 146 via some form of inter-application communications 160. Likewise, the notification-enabled application 122 is shown with a notification server proxy 126, which is capable of processing a notification trigger 128, and delivering it to the notification server 146 via some form of inter-application communications 160. The notification server application 142 is shown with a long polling mechanism 144, and the notification server 146, which is capable of receiving notifications from the notification server proxies 106 and 126 via the inter-application Communication 160, and delivering them to the HTTP client 200 via the long polling mechanism 144. At application start-up time, the notification server proxies 106 and 126 may obtain unique APPIDs from the notification server 146. The notification server 146 may assign APPIDs using sequential integers represented in radix 36. As illustrated, this embodiment is shown with only two notification-enabled applications, but the present invention does not limit the number of notification-enabled applications that can be deployed to the application server.

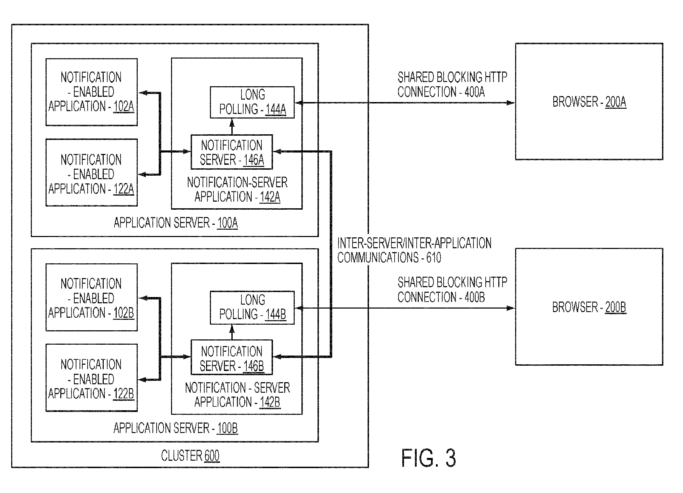

Another alternative embodiment of a communications system will now be presented with reference to FIG. 3. In this embodiment, the HHTP client 200A is unchanged from the HTTP Client 200 in FIG. 1, and therefore its internal details are not depicted. Likewise for a similar HTTP client 200B. Also, the internal details of individual notification-enabled applications are unchanged from FIG. 2, and are therefore not depicted. In this embodiment, a cluster 600 is shown with two application servers 100A and 100B. The first application server 100A is shown with multiple deployed notification-enabled applications 102A and 122A, as well as a notification server application 142A. Likewise, the application server 100B is shown with multiple deployed notification-enabled applications 102B and 122B, as well as a notification server application 142B. Interactions between the notification server proxies (not shown) and the notification server within a single application server are unchanged from the exemplary embodiment described in connection with FIG. 2. In this embodiment however, the notification servers 146A and 146B may coordinate delivery of notifications across the cluster 600 using some form of inter-application communications 610. A notification trigger in the notification-enabled application 102A can cause notifications to occur to the notification clients (not shown) at both HTTP clients 200A and 200B, which are connected to the application servers 100A and 100B respectively. In this case, the notification server 146A may deliver notifications directly to the HTTP client 200A via a long polling mechanism 144A, but also passes the notification trigger to the notification server 146B over inter-application Communications 610. The notification server 146B can then in turn deliver notifications directly to the HTTP client 200B via a long polling mechanism 144B. At application start-up time, unique APPIDs may be assigned to the notification-enabled applications in the cluster. A master election mechanism may be used to select exactly one master notification server that is responsible for APPID generation, and should the master fail, the election mechanism may then select a new master notification server. The master notification server may assign APPIDs using sequential integers represented in radix 36. For efficiency, contiguous blocks of APPIDs may be assigned from the master notification server to other non-master notification servers requesting APPIDs. These blocks of APPIDs can then be managed locally by the non-master notification servers, and assigned to notification-enabled applications at start-up. As illustrated, this embodiment is shown with only two application servers 100A and 100B in the cluster 600, but the present invention does not limit the number of application servers deployed in the cluster. In certain embodiments, the cluster may contain other network technologies like a web server performing load balancing within the cluster, but these details are omitted for clarity.

Various methods may be employed for uniquely identifying notification clients within a clustered deployment. A (HTTPCLIENTID, SUBID) tuple represents a unique notification client ID ("NCID") and is associated with a unique notification client. The HTTPCLIENTID uniquely identifies each HTTP client connecting to a notification-enabled application in the deployment. There are no specific expiry requirements on it, but it should be non-guessable for security purposes. SUBIDs are unique for each HTTPCLIENTID, and may be assigned by some central authority.

The HTTPCLIENTID generation may be performed by individual notification-enabled applications when an HTTP client makes an initial request to the notification-enabled application. The HTTPCLIENTID may be produced by calculating the MD5 hash on the concatenation of a random seed value, application start-up time in milliseconds, host application server IP address, and APPID. This HTTPCLIENTID may be set in a browser cookie, and may be used in all subsequent requests to notification-enabled applications in the deployment, ensuring that the HTTPCLIENTID is assigned once and only once within the cluster.

In one embodiment of the present invention, SUBIDs may be generated from a central authority established among all notification servers in the deployment. This central authority may be the same master notification server used to generate unique APPIDs as described above. The master notification server may assign APPIDs using sequential integers represented in radix 36, starting from 0 for each HTTPCLIENTID. For efficiency, contiguous blocks of SUBIDs may be assigned from the master notification server to other non-master notification servers requesting SUBIDs. These blocks of SUBIDs can then be managed locally by the non-master notification servers, and assigned to notification-enabled applications requesting SUBIDs.

A group membership mechanism may be defined for organizing NCIDs under named groups. For a given named group, notifications may be broadcast to all NCIDs assigned to the group. Namespace separation between deployed notification-enabled applications may be accomplished by prepending the application name to the group name. A global namespace, applying to all deployed notification-enabled applications, may be supported by prepending a known, fixed prefix like "/" to the group name. Group naming and membership strategies are application-specific and well within the capabilities of one skilled in the art.

In one embodiment of the present invention, all notification servers deployed in the cluster are responsible for managing group membership. Notification-enabled applications determine group names and membership in some application-specific way, but register specific (NCID, group name) tuples with their notification server proxy, which in turn forwards the registration to the notification server for management. The registration process automatically prepends the application name to the group name to create namespace separation between notification-enabled applications. A global namespace is supported by prepending a "/" to a group name, in which case the registration process does not automatically prepend the application name to the group name. Group registrations are broadcast to all notification servers in the cluster and managed locally at each notification server. As with group registration, a similar mechanism is present for deregistration of NCIDs from named groups. Notification-enabled applications deregister (NCID, group name) tuples with their notification server proxy, which in turn forwards the de-registration to the notification server for processing. Group de-registrations are broadcast to all notification servers in the cluster. When membership in a group drops to zero, the group is removed from management at all notification servers.

In this same embodiment of the present invention, a notification to a named group is triggered from a notification-enabled application. The notification is handled by the notification server proxy, and delivered to the notification server for processing. The notification server broadcasts the group notification to all notification servers in the cluster, and each notification server, in turn, delivers notifications to individual notification clients that are connect to it. Broadcasting group notifications in the cluster, versus broadcasting individual notification client notifications, can significantly reduce network traffic in the cluster.

Because each notification server maintains complete group membership state in this embodiment of the present invention, affinity between an individual notification client and a notification server is not necessary. Any notification client can connect to any notification server and receive notifications from any notification-enabled application. Various load balancing strategies can be applied in the cluster, as management of long polling blocking connections is stateless from the notification client and notification-enabled application perspectives - with all necessary state maintained at the notification servers. This characteristic is also advantageous in fail-over scenarios, as other notification servers in the cluster can absorb the load of a failed notification server, without the need to recover any state from the failed notification server. Without the requirement for affinity between notification clients and a notification servers, and because there are minor delays in establishing blocking connections, there is a possibility that duplicate notifications could be delivered by different notification servers on subsequent long polling requests. A notification tag may be defined, and the present invention is augmented to eliminate duplicate notifications. Notification tags are generated by notification-enabled applications by appending an incremental counter to the unique APPID assigned to the notification-enabled application. Separate counters may be maintained for all group names being notified. When a notification server processes a group notification, the latest notification tag may be saved for each NCID in the group. The notification tag may be then passed to the HTTP client with the notification, and the notification tag may be echoed in the next blocking connection request associated with the long polling mechanism. The notification server receiving the request compares the notification tag with its saved value for the connecting NCID, and any pending notification that matches the echoed notification tag is considered a duplicate, and discarded.

The functions presented throughout this disclosure may be implemented by any suitable means, whether implemented in hardware, software, or any combination thereof. An example of a software implementation of an application server will now be presented in connection with FIG. 4. However, the present invention is not limited to any specific implementation, and those skilled in the art will be readily able to determine the optimal implementation depending on the particular application and the overall design constraints imposed on the system.

Turning to FIG. 4, a conceptual block diagram illustrating an exemplary implementation of an application server is shown. In this example, the application server 400 is implemented with a software system 404 supported by a hardware system 402. The hardware system 402 may be configured, by way of example, with a bus architecture that includes any number of interconnecting buses and bridges. The bus architecture may be used to link one or more general-purpose and/or special-purpose processors, machine-readable media, and other supporting circuitry (e.g., timing sources, peripherals, voltage regulators, power management circuits, etc.). Examples of processors include microprocessors, microcontrollers, digital signal processors (DSPs), and other circuitry that can execute software. Machine-readable media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be used to store software that collectively, in whole or part, comprises the software system 404.

The software system 404 includes system software 406 and application software 408. The system software 404 generally includes low-level programs that operate the hardware system 402 and provide a platform for running the application software 408. This includes, by way of example, operating systems, utility programs, compilers, loaders, linkers, debuggers, and other similar programs that interact with the hardware system 402. The application software 408 generally includes web applications that process HTTP requests associated with the web applications. The web applications may include one or more notification-enabled applications. In the case where multiple notification-enabled applications are deployed in the application server 400, the application software 408 may also include a notification server application to manage access to the shared blocking HTTP connection among the notification-enabled applications. The notification server application includes a long polling mechanism which provides a means for maintaining an open HTTP connection, and a notification server which provides a means for providing an asynchronous notification to one or more notification clients through the open HTTP connection. In the case where a single notification-enabled application is deployed in the application server 400, the long polling mechanism and the notification server functions may be implemented in the notification-enabled application as described in greater detail above.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Unless specifically stated otherwise, the term "some" refers to one or more. Pronouns in the masculine (e.g., his) include the feminine and neuter gender (e.g., her and its) and vice versa. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. §112, sixth paragraph, unless the element is expressly recited using the phrase "means for" or, in the case of a method claim, the element is recited using the phrase "step for."

Aspects of the invention:
1. An application server configured to host one or more web applications and process HTTP requests associated with the one or more web applications, comprising:
   a long polling mechanism configured to maintain an open HTTP connection; and
   a notification server configured to provide an asynchronous notification to one or more notification clients through the open HTTP connection, wherein the notification includes an identifier for the one or more notification clients with no application data payload.
2. The application server of aspect 1 further comprising a notification-enabled application that includes the notification server.
3. The application server of aspect 2 wherein the notification server is further configured to provide the notification in response to a notification trigger for the notification-enabled application, wherein the notification trigger contains a group name, and wherein the one or more notification clients are members of the group.
4. The application server of aspect 3 wherein the notification-enabled application is configured to determine the group name and the group members.
5. The application server of aspect 4 wherein the notification-enabled application is further configured to register with the notification server the group name and the identifier for the members of the group.
6. The application server of aspect 5 wherein the notification server is further configured to use the registration to provide the notification with the identifier to the one or more notification clients in response to the notification trigger containing the group name.
7. The application server of aspect 5 wherein the notification-enabled application is further configured to de-register one or more of the group members from the group.
8. The application server of aspect 1 further comprising one or more notification-enabled applications, wherein the notification server is further configured provide the notification in response to a notification trigger for any one of the one or more notification-enabled applications.
9. The application server of aspect 8 wherein the notification server is further configured to receive a notification tag from said any one of the one or more notification-enabled applications.
10. The application server of aspect 9 wherein the notification server is further configured to provide the notification tag with the notification to the one or more notification clients through the open HTTP connection.
11. The application server of aspect 10 wherein the notification server is further configured to receive a copy of the notification tag from one of the one or more notification clients with the next HTTP request from said one of the one or more notification clients.
12. The application server of aspect 11 wherein the notification server is further configured to receive a subsequent notification trigger for a subsequent notification and subsequent notification tag from said any one of the one or more notification-enabled applications, and wherein the notification server is further configured to compare the copy of the notification tag received from said one of the one or more notifications clients with the subsequent notification tag.
13. The application server of aspect 12 wherein the notification server is further configured to discard the subsequent notification if the copy of the notification tag received from said one of the one or more notification clients matches the subsequent notification tag.
14. The application server of aspect 8 wherein the one or more notification-enabled applications comprise a plurality of notification-enabled applications.
15. The application server of aspect 8 wherein said any one of the one or more notification-enabled applications comprises a notification server proxy configured to deliver the notification trigger for said any one of the one or more notification-enabled applications to the notification server.
16. The application server of aspect 8 wherein the notification trigger contains a group name, wherein the one or more notification clients are members of the group.
17. The application server of aspect 16 wherein said any one of the one or more notification-enabled applications is configured to determine the group name and the group members.
18. The application server of aspect 17 wherein said any one of the one or more notification-enabled applications is further configured to register with the notification server the group name and the identifier for the members of the group.
19. The application server of aspect 18 wherein said any one of the one or more notification-enabled applications comprises a notification server proxy, wherein said any one of the one or more notification-enabled applications is further configured to register with the notification server proxy the group name and the identifier for the members of the group, and wherein the notification server proxy is configured to forward the registration to the notification server.
20. The application server of aspect 18 wherein the notification server is further configured to use the registration to provide the notification with the identifier to the one or more notification clients in response to the notification trigger containing the group name.
21. The application server of aspect 18 wherein said any one of the one or more notification-enabled applications is further configured to de-register one or more of the group members from the group.
22. The application server of aspect 1 wherein the notification server is further configured to provide the notification to one or more other applications servers in a cluster environment.
23. The application server of aspect 1 wherein the notification server is further configured to receive the notification provided to the one or more notification clients from another application server in a cluster environment.
24. A method of providing asynchronous communications from an application server configured to host one or more web applications and process HTTP requests associated with the one or more web applications, the method comprising:
   maintaining an open HTTP connection; and
   providing an asynchronous notification to one or more notification clients through the open HTTP connection, wherein the notification includes an identifier for the one or more notification clients with no application data payload.
25. The method of aspect 24 wherein the notification is provided to the one or more notification clients in response to a notification trigger, wherein the notification trigger contains a group name, and wherein the one or more notification clients are members of the group.
26. The method of aspect 25 further comprising determining the group name and the group members.
27. The method of aspect 26 further comprising registering the group name and the identifier for the members of the group.
28. The method of aspect 27 further comprising using the registration to provide the notification with the identifier to the one or more notification clients in response to the notification trigger containing the group name.
29. The method of aspect 27 further comprising de-registering one or more of the group members from the group.
30. The method of aspect 24 further comprising providing a notification tag for any one of one or more notification-enabled applications with the notification to the one or more notification clients through the open HTTP connection.
31. The method of aspect 30 further comprising receiving a copy of the notification tag from one of the one or more notification clients with the next HTTP request from said one of the one or more notification clients.
32. The method of aspect 31 further comprising comparing the copy of the notification tag received from said one of the one or more notification clients with a subsequent notification tag associated with a subsequent notification.
33. The method of aspect 32 further comprising discarding the subsequent notification in response to the copy of the notification tag received from said one of the one or more notification clients matching the subsequent notification tag.
34. The method of aspect 24 further comprising providing the notification to one or more other applications servers in a cluster environment.
35. The method of aspect 24 further comprising receiving the notification provides to the one or more notification clients from another application server in a cluster environment.
36. A machine-readable medium comprising instructions executable by a one or more processors to provide asynchronous communications from an application server configured to host one or more web applications and process HTTP requests associated with the one or more web applications, the instructions comprising:
   code for maintaining an open HTTP connection; and
   code for providing an asynchronous notification to one or more notification clients through the open HTTP connection, wherein the notification includes an identifier for the one or more notification clients with no application data payload.
37. The machine-readable medium of aspect 36 wherein the code for providing the notification is configured to provide the notification in response to a notification trigger for a notification-enabled application, wherein the notification trigger contains a group name, and wherein the one or more notification clients are members of the group.
38. The machine-readable medium of aspect 37 wherein the instructions further comprise code for the notification-enabled application to register the group name and an identifier for the members of the group.
39. The machine-readable medium of aspect 38 wherein the code for providing the notification is configured to use the registration to provide the notification with the identifier to the one or more notification clients in response to the notification trigger containing the group name.
40. The machine-readable medium of aspect 37 wherein the instructions further comprises code for the notification-enabled application to de-register one or more of the group members from the group.
41. The machine-readable medium of aspect 36 wherein the code for providing the notification is configured to provide a notification tag for any one of one or more notification-enabled applications with the notification to the one or more notification clients through the open HTTP connection.
42. The machine-readable medium of aspect 41 wherein the code for providing the notification is configured to provide the notification to the one or more notification clients with a notification tag for said any one of the one or more notification-enabled applications.
43. The machine-readable medium of aspect 42 wherein the instructions further comprise code for comparing the copy of the notification tag received from said one of the one or more notification clients with a subsequent notification tag associated with a subsequent notification.
44. The machine-readable medium of aspect 43 wherein the instructions further comprises code for discarding the subsequent notification if the copy of the notification tag received from said one of the one or more notification clients matches the subsequent notification tag.
45. The machine-readable medium of aspect 36 wherein the instructions further comprise code for providing the notification to one or more other applications servers in a cluster environment.
46. The machine-readable medium of aspect 36 wherein the instructions further comprise code for receiving the notification provided to the one or more notification clients from another application server in a cluster environment.
47. An application server configured to host one or more web applications and process HTTP requests associated with the one or more web applications, comprising:
   means for maintaining an open HTTP connection; and
   means for providing an asynchronous notification to one or more notification clients through the open HTTP connection, wherein the notification includes an identifier for the one or more notification clients with no application data payload.

## Claims

1. An application server configured to host one or more web applications and process HTTP requests associated with the one or more web applications, comprising:
means configured to maintain an open HTTP connection; and
means configured to provide an asynchronous notification to one or more notification clients through the open HTTP connection, wherein the notification includes an identifier for the one or more notification clients with no application data payload.

2. The application server of claim 1 wherein the means configured to maintain an open HTTP connection comprises a long polling mechanism; and
the means configured to provide an asynchronous notification comprises a notification server.

3. The application server of claim 2 further comprising a notification-enabled application that includes the notification server; and
preferably wherein the notification server is further configured to provide the notification in response to a notification trigger for the notification-enabled application, wherein the notification trigger contains a group name, and wherein the one or more notification clients are members of the group; and
preferably wherein the notification-enabled application is configured to determine the group name and the group members; and
preferably wherein the notification-enabled application is further configured to register with the notification server the group name and the identifier for the members of the group.

4. The application server of claim 3 wherein the notification server is further configured to use the registration to provide the notification with the identifier to the one or more notification clients in response to the notification trigger containing the group name; or
wherein the notification-enabled application is further configured to de-register one or more of the group members from the group.

5. The application server of claim 2 further comprising one or more notification-enabled applications, wherein the notification server is further configured provide the notification in response to a notification trigger for any one of the one or more notification-enabled applications; and.
preferably wherein the notification server is further configured to receive a notification tag from said any one of the one or more notification-enabled applications; and
preferably wherein the notification server is further configured to provide the notification tag with the notification to the one or more notification clients through the open HTTP connection; and
preferably wherein the notification server is further configured to receive a copy of the notification tag from one of the one or more notification clients with the next HTTP request from said one of the one or more notification clients; and
preferably wherein the notification server is further configured to receive a subsequent notification trigger for a subsequent notification and subsequent notification tag from said any one of the one or more notification-enabled applications, and wherein the notification server is further configured to compare the copy of the notification tag received from said one of the one or more notifications clients with the subsequent notification tag; and
preferably wherein the notification server is further configured to discard the subsequent notification if the copy of the notification tag received from said one of the one or more notification clients matches the subsequent notification tag.

6. The application server of claim 5 wherein the one or more notification-enabled applications comprise a plurality of notification-enabled applications; or
wherein said any one of the one or more notification-enabled applications comprises a notification server proxy configured to deliver the notification trigger for said any one of the one or more notification-enabled applications to the notification server.

7. The application server of claim 5 wherein the notification trigger contains a group name, wherein the one or more notification clients are members of the group; and
preferably wherein said any one of the one or more notification-enabled applications is configured to determine the group name and the group members; and
preferably wherein said any one of the one or more notification-enabled applications is further configured to register with the notification server the group name and the identifier for the members of the group.

8. The application server of claim 7 wherein said any one of the one or more notification-enabled applications comprises a notification server proxy, wherein said any one of the one or more notification-enabled applications is further configured to register with the notification server proxy the group name and the identifier for the members of the group, and wherein the notification server proxy is configured to forward the registration to the notification server; or
wherein the notification server is further configured to use the registration to provide the notification with the identifier to the one or more notification clients in response to the notification trigger containing the group name; or
wherein said any one of the one or more notification-enabled applications is further configured to de-register one or more of the group members from the group.

9. The application server of any preceding claim wherein the notification server is further configured to provide the notification to one or more other applications servers in a cluster environment; or
wherein the notification server is further configured to receive the notification provided to the one or more notification clients from another application server in a cluster environment.

10. A method of providing asynchronous communications from an application server configured to host one or more web applications and process HTTP requests associated with the one or more web applications, the method comprising:
maintaining an open HTTP connection; and
providing an asynchronous notification to one or more notification clients through the open HTTP connection, wherein the notification includes an identifier for the one or more notification clients with no application data payload.

11. The method of claim 10 wherein the notification is provided to the one or more notification clients in response to a notification trigger, wherein the notification trigger contains a group name, and wherein the one or more notification clients are members of the group; and
preferably further comprising determining the group name and the group members; and
preferably further comprising registering the group name and the identifier for the members of the group.

12. The method of claim 11 further comprising using the registration to provide the notification with the identifier to the one or more notification clients in response to the notification trigger containing the group name; or
further comprising de-registering one or more of the group members from the group.

13. The method of claim 10 further comprising providing a notification tag for any one of one or more notification-enabled applications with the notification to the one or more notification clients through the open HTTP connection; and
preferably further comprising receiving a copy of the notification tag from one of the one or more notification clients with the next HTTP request from said one of the one or more notification clients; and
preferably further comprising comparing the copy of the notification tag received from said one of the one or more notification clients with a subsequent notification tag associated with a subsequent notification; and
preferably further comprising discarding the subsequent notification in response to the copy of the notification tag received from said one of the one or more notification clients matching the subsequent notification tag.

14. The method of claim 10 further comprising providing the notification to one or more other applications servers in a cluster environment; or
further comprising receiving the notification provides to the one or more notification clients from another application server in a cluster environment.

15. A machine-readable medium comprising instructions executable by a one or more processors to provide asynchronous communications from an application server configured to host one or more web applications and process HTTP requests associated with the one or more web applications, the instructions, when executed by the one or more processors causing the one or more processors to carry out the method of any one of claims 10 to 14.
